# EUROPÄISCHE PATENTSCHRIFT

(11) **EP 0 508 952 B1**
(45) Veröffentlichungstag und Bekanntmachung des Hinweises auf die Patenterteilung: **03.04.1996**
(21) Anmeldenummer: 92810238.3
(22) Anmeldetag: 31.03.1992
(51) Int. Cl.: C08G 59/68, C08J 5/24

(54) **Epoxidharz-Stoffgemische, insbesondere zur Herstellung lagerfähiger Prepregs**
Epoxy resin blends, especially for the preparation of storable prepregs
Compositions de résines époxy, particulièrement pour la préparation des préimprégnés stables au stockage

(30) Priorität: 08.04.1991 CH 1028/91
(43) Veröffentlichungstag der Anmeldung: 14.10.1992
(73) Patentinhaber: CIBA-GEIGY AG, CH-4002 Basel (CH)
(72) Erfinder: Haug, Theobald, Dr., CH-4402 Frenkendorf (CH); Müller, Beat, Dr., CH-1723 Marly (CH); Roth, Martin, Dr., CH-1735 Giffers (CH)

(56) Entgegenhaltungen:
- EP-A- 0 379 464
- US-A- 4 554 342
- PATENT ABSTRACTS OF JAPAN vol. 6, no. 35 (C-093)1982

## Beschreibung

Die Erfindung betrifft härtbare Stoffgemische enthaltend ein Epoxidharz, bestimmte araliphatische Sulfoniumsalze als Initiatoren und bestimmte Amine als Stabilisatoren, die unter Verwendung der Stoffgemische erhältlichen Prepregs und Laminate sowie ein Verfahren zur Herstellung der Laminate.

Zur Herstellung von Schichtpresstoffen auf Epoxidbasis verwendet man im allgemeinen ausgewählte Härter/Beschleuniger Kombinationen, beispielsweise die Kombination Dicyandiamid/Imidazol. Die Harzformulierungen müssen einer Reihe von Anforderungen entsprechen, die teilweise schwierig miteinander zu vereinbaren sind. So sollten beispielsweise eine ausreichende Lagerstabilität des Prepregs und eine rasche Aushärtung des Matrixharzes im Presswerkzeug gegeben sein.

Kationisch härtbare Gemische enthaltend Sulfoniumsalze der weiter unten genannten Formeln (I) bis (IV) als Initiatoren und die Verwendung der Gemische unter anderem als Imprägnier-, Laminier- und Matrixharze sind aus der EP-A-0 379 464 bekannt. Die Gemische dürfen nach der dort vertretenen Lehre keine Amine enthalten, um die kationische Härtung mit den Sulfoniumsalzen nicht zu stören.

Diese Gemische ermöglichen zwar eine rasche thermische Aushärtung des Matrixharzes zu Laminaten mit guten Eigenschaften, haben aber doch Nachteile. So dürfen mit Hilfe von Lösungen dieser Gemische hergestellte Prepregs nur bei Temperaturen bis ca. 125 °C getrocknet werden, wenn die Prepregs noch zu Laminaten verpressbar sein sollen. Bei derartig niedrigen Trockentemperaturen besteht aber die Gefahr, dass das aus dem Prepregmaterial noch nicht vollständig entfernte Lösungsmittel beim Verpressen zu Laminaten Blasen in den Laminaten bildet und/oder im Sinne eines Weichmachers die Glasumwandlungstemperatur (T_{g}) der ausgehärteten Laminate unvorteilhaft erniedrigt. Werden die Gemische dagegen lösungsmittelfrei bei erhöhter Temperatur in Form einer Schmelze appliziert, besteht ebenfalls die Gefahr, dass bereits eine so starke Vorvernetzung eintritt, dass keine Weiterverarbeitung so hergestellter Prepregs zu Laminaten mehr möglich ist. Ausserdem vermag die Lagerfähigkeit des Matrixharzes oder der mit diesen Harzen hergestellten Prepregs den Anforderungen nicht ganz zu genügen.

Ueberraschenderweise wurde nun gefunden, dass sich die Zugabe kleiner Mengen bestimmter Amine zu den vorbekannten Epoxidharzgemischen stabilisierend auf das Gemisch auswirkt, so dass die Temperatur der Gemische bei der Herstellung von Prepregs stark erhöht werden kann. Die oben geschilderten Nachteile treten mit den neuen Stoffgemischen nicht oder nur mehr in äusserst geringem Ausmass auf und es findet beim thermischen Verpressen der Prepregs zu Laminaten eine schnelle Aushärtung des Schichtmaterials statt. Ausserdem verbessert der Zusatz die Lagerfähigkeit des Gemisches und daraus hergestellter Prepregs.

Gegenstand der Erfindung sind daher härtbare Stoffgemische enthaltend
(a) ein Epoxidharz,
(b) ein Sulfoniumsalz der Formeln (I), (II), (III) oder (IV): 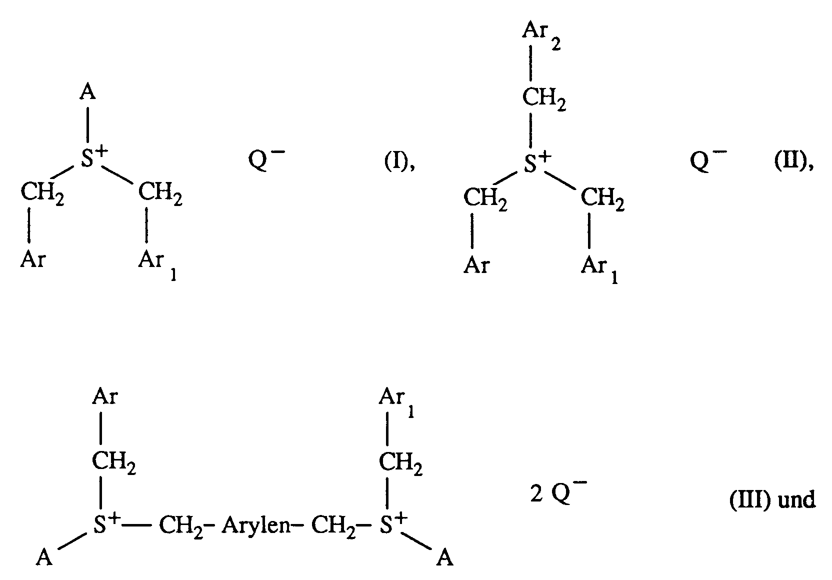 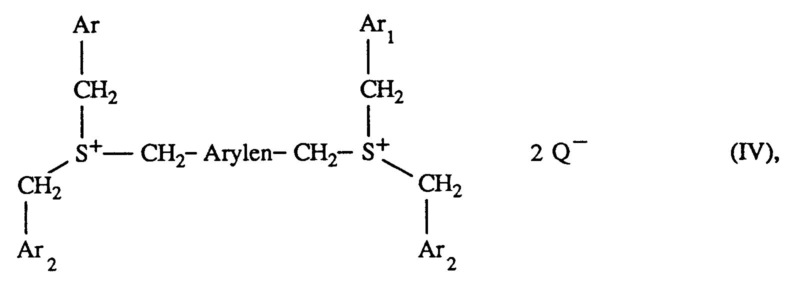 worin A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten, Arylen je ein unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder Naphthylen bedeutet und Q⁻ für SbF₆⁻, AsF₆⁻ oder SbF₅OH⁻ steht, und
(c) einen Stabilisator ausgewählt aus der Gruppe
   (c1) aromatische Amine mit einem pKa-Wert von 2-5 und mit einer bis vier NH₂-Gruppen mit mindestens einem Substituenten in ortho-Stellung zu jeder Aminogruppe, wobei der Substituent C₁-C₁₀-Alkyl, C₁-C₁₀-Alkoxy, C₅-C₆-Cycloalkyl, C₆-C₁₀-Aryl, oder Halogen bedeutet, mit der Massgabe, dass das Amin nicht in beiden ortho-Stellungen zu einer Aminogruppe durch Halogen substituiert ist, oder
   (c2) aromatische Amine mit einem pKa-Wert von 2-5 und mit einer bis 4 NH₂-Gruppen mit einem ortho- oder para-Substituenten zu jeder Aminogruppe, wobei der Substituent -COOH, -COOR, -COR, -SO₂R oder -SOR bedeutet und R für C₁-C₁₀-Alkyl, C₅-C₆-Cycloalkyl, C₆-C₁₀-Aryl, Aminoaryl oder -R′-OOC-C₆H₄-NH₂ mit R′ gleich Alkylen steht oder
   (c3) Bipyridine,
   wobei im Stoffgemisch 0,1-10 Gew.% der Komponente (b) und 0,02-5 Gew.% der Komponente (c), bezogen auf das Epoxidharz (a), vorhanden sind.

Die erfindungsgemässen Stoffgemische eignen sich insbesondere für die Herstellung von lagerstabilen Prepregs, welche thermisch schnell härtbar sind und zu Laminaten mit ausgezeichneten Eigenschaften verpresst werden können.

Die Erfindung betrifft daher auch Prepregs enthaltend ein faserförmiges Trägermaterial und ein erfindungsgemässes Stoffgemisch, sowie die durch thermische Härtung der Prepregs erhaltenen Laminate.

Als Trägermaterialien sind im Prinzip alle Fasern geeignet, die mit der Epoxidmatrix einen Verbund ausbilden können und eine Verstärkung des Matrixmaterials bewirken. Beispiele für Fasermaterialien sind natürliche Polymere, wie Cellulose; Metalle, wie Stahl, Ti, W, Ta oder Mo; organische faserbildende Polymere, insbesondere aromatische Polyamide, wie Nomex oder Kevlar; Kohlenstoff, wie z.B. durch Carbonisieren von Cellulose, Polyacrylnitril oder Pech hergestellte Materialien und insbesondere Glas.

Die Fasermaterialien können in unterschiedlichsten Formen als Träger eingesetzt werden Sie lassen sich beispielsweise als Endlosfäden (einzelne Fäden oder Spinnfäden), Endlosgarne, Parallelrovings, als gewebte Endlosgarne, Spinnrovings, Rovinggewebe, Kurzfasern, Endlosmatten, Schnittmatten, Vliesstoffe oder Filze (Papiere) verwenden. Besonders bevorzugte Materialien sind Glasgewebe und Papier.

Das Kontaktieren des faserförmigen Trägermaterials mit dem härtbaren Gemisch wird je nach Fasertyp und Faserform oder den Eigenschaften des Matrixmaterials unterschiedlich sein. Beispiele für solche Verfahren sind das Imprägnieren von Geweben, Vliesen oder Endlosfasern mit der flüssigen Harz/Härtermischung oder mit einer Lösung einer Mischung aus einem festen und/oder flüssigen Harz und dem Sulfoniumsalzhärter in einem inerten Lösungsmittel.

Schichten enthaltend Kurzfasern können beispielsweise durch Aufbringen der härtbaren Mischung zusammen mit geschnittenen Fasern auf ein Gewebe oder eine Metallfolie hergestellt werden.

Das Kontaktieren des faserförmigen Trägermaterials mit dem härtbaren Gemisch erfolgt vorzugsweise durch Imprägnieren. Dazu durchlaufen Gewebebahnen aus besagtem Trägermaterial beispielsweise ein Harzbad, enthaltend das Epoxidharz, den Initiator, den Stabilisator und gegebenenfalls ein Lösungsmittel, werden gegebenenfalls getrocknet und anschliessend auf eine Vorratsspule aufgewickelt.

Gegenstand der Erfindung ist auch ein Verfahren zur Herstellung eines Laminates umfassend die Schritte
i) Herstellung einer Schicht durch Kontaktieren eines faserförmigen Trägermaterials mit einem härtbaren erfindungsgemässen Stoffgemisch in einer fliessfähigen Form,
ii) Herstellen einer Schichtfolge aus mindestens zwei schichtförmigen, miteinander zu verbindenden Materialien, wovon mindestens eines eine gemäss Schritt i) erhältliche und gewünschtenfalls zuvor zwischengelagerte Schicht ist, bei der das härtbare Material im wesentlichen in unveränderter Form vorliegt, und
iii) Verpressen besagter Schichtfolge bei erhöhter Temperatur und unter Druck.

Enthält das in Schritt i) eingesetzte erfindungsgemässe Stoffgemisch ein Lösungsmittel, so muss das Lösungsmittel im allgemeinen bei erhöhter Temperatur entfernt werden. Bevorzugt liegt diese Temperatur so hoch, dass möglichst viel Lösungsmittel aus dem Material entfernt wird, beispielsweise bis der Lösungsmittelgehalt des Materials unter 0,5 Gew.-% liegt. Dabei sind Temperaturen bis zu ca. 200 °C möglich.

Bei einer speziellen Ausführungsform des oben beschriebenen Verfahrens wird daher in Schritt i) das faserförmige Trägermaterial zur Herstellung der Schicht mit einer Lösung des erfindungsgemässen härtbaren Stoffgemisches kontaktiert. Das Lösungsmittel wird bei einer Temperatur bis zu 200 °C entfernt. Dies kann beispielsweise in einem Abluftofen oder in einem Durchlaufofen (Geschwindigkeit z. B. 2 bis 25 Meter pro Minute) geschehen. Die Erhitzungszeit beträgt bevorzugt 1 bis 10 Minuten.

In Schritt ii) werden einzelne Schichten aus dem vorangehend erhaltenen Material in der gewünschten Anzahl übereinander verlegt. Dabei kann es sich um jeweils gleiche Schichten handeln oder es können noch Schichten aus weiteren Materialien anwesend sein. Beispiele für Schichten aus weiteren Materialien sind Metallfolien, wie Kupferfolien oder Aluminiumfolien, oder weitere Verstärkungsmittel, wie Matten oder Vliese aus faserförmigem Verstärkungsmaterial.

In Schritt iii) wird die gemäss ii) erhaltene Anordnung durch Verpressen und Erhitzen gehärtet. Die Verfahrensbedingungen in Schritt iii) können konstant gehalten oder variiert werden. So kann man beispielsweise in einer ersten Stufe Druck und Temperatur in einer Weise vorgeben, dass im wesentlichen noch keine Härtung abläuft oder die Härtungsgeschwindigkeit so langsam ist, dass die Viskosität des Harzes infolge der Temperaturerhöhung auf das gewünschte Ausmass absinkt. Anschliessend können Druck und/oder Temperatur erhöht werden, so dass die gewünschte Geschwindigkeit des Viskositätsanstieges erzielt wird. Diese Erhöhungen können kontinuierlich oder stufenweise erfolgen. So kann man beispielsweise den Druck entsprechend dem Viskositätsanstieg stufenweise erhöhen, während die Temperatur kontinuierlich erhöht wird.

Druck und Temperatur können aber auch zu Beginn von Schritt iii) fest vorgegeben werden, so dass die Vernetzungsreaktion praktisch sofort einsetzt.

Schritt iii) kann diskontinuierlich in Etagenpressen oder kontinuierlich in Doppelbandpressen erfolgen, gegebenenfalls auch unter Vakuum.

In einer bevorzugten Ausführungsform des Verfahrens werden Schritte ii) und iii) kontinuierlich ausgeführt. Dazu führt man beispielsweise Bahnen des gemäss Schritt i) erhältlichen Materials gegebenenfalls zusammen mit Bahnen weiterer schichtförmiger miteinander zu verbindender Materialien in der jeweils gewünschten Schichtfolge gleichzeitig zwischen beheizbaren Doppelbandpressen hindurch.

Schritt i) kann bei dieser Ausführungsform separat ausgeführt werden, indem man das faserförmige Trägermaterial mit dem härtbaren Gemisch kontaktiert und die erhaltenen Bahnen auf Vorratsrollen aufwickelt.

Schritt i) kann aber auch zusammen mit den Schritten ii) und iii) kontinuierlich ausgeführt werden, indem man beispielsweise Bahnen des faserförmigen Trägermaterials unmittelbar vor Schritt ii) durch ein Harzbad führt.

Die Pressdrucke in Schritt iii) betragen im allgemeinen 1-60 bar, vorzugsweise 10-50 bar; die Härtungstemperaturen liegen im allgemeinen bei 50-250°C, vorzugsweise bei 80-200°C, am meisten bevorzugt bei 100-200°C. Die Pressdauer beläuft sich, abhängig vom jeweiligen härtbaren Gemisch, im allgemeinen auf 0,1-120 Minuten, vorzugsweise 0,1-60 Minuten, insbesondere 0,1-20 Minuten.

Als faserförmiges Trägermaterial im Schritt i) wird vorzugsweise Glasgewebe oder Papier verwendet.

Pressdrucke und -temperaturen hängen im allgemeinen vom jeweils verwendeten härtbaren Gemisch ab. Bei der Auswahl der experimentellen Parameter spielen beispielsweise Reaktivität und Aggregatzustand des jeweiligen Harz/Härter-Gemisches eine Rolle.

Die im Einzelfall notwendigen Bedingungen können vom Fachmann anhand der oben angegebenen Kriterien ausgewählt und optimiert werden.

Als Stabilisator-Komponenten (c) für die erfindungsgemässen Stoffgemische geeignet sind die oben definierten aromatischen Amine (c1) bzw. (c2), welche eine bis 4 NH₂-Gruppen aufweisen. Solche Verbindungen mit 2, 3 oder 4 NH₂-Gruppen können z.B. durch Kondensation eines entsprechend substituierten Anilins mit Aldehyden oder Ketonen, z.B. mit Formaldehyd [Komponente (c1)] oder durch Umsetzung einer Aminosäure mit Verbindungen, die 2-4 zur Esterkondensation befähigte OH-Gruppen besitzen. [Komponente (c2)] hergestellt werden.

Die als Komponenten (c1) und (c2) verwendeten aromatischen Amine können einkernig oder zweikernig sein. Die zweikernigen Verbindungen können sowohl kondensierte als auch unkondensierte Ringe enthalten.

Die Alkylsubstituenten bzw. die Alkylgruppen der Alkoxysubstituenten der Komponente (c1) können geradkettig oder verzweigt sein. Beispiele geeigneter Alkylgruppen sind Methyl, Ethyl, n- und Isopropyl, Butyl, Pentyl, Hexyl, Octyl oder Decyl, Beispiele geeigneter Alkoxygruppen sind die diesen Alkylresten entsprechenden Alkoxyreste. Beispiele geeigneter Cycloalkylgruppen sind Cyclopentyl oder Cyclohexyl. Beispiele geeigneter Arylgruppen sind Phenyl oder Naphthyl. Geeignete Halogensubstituenten sind Iod, Brom und insbesondere Chlor.

Bevorzugte Komponenten (c1) haben eine oder zwei NH₂-Gruppen und einen pKa-Wert von 3-4,5 und weisen mindestens einen Alkylsubstituenten in ortho-Stellung zu jeder Aminogruppe auf. Besonders bevorzugte Komponenten (c1) sind 2,6-Dialkylaniline oder Verbindungen der Formel (V) 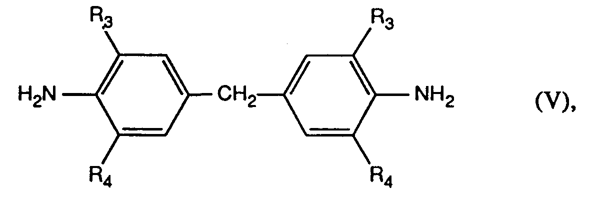
worin R₃ Chlor oder C₁-C₃-Alkyl und R₄ Wasserstoff oder C₁-C₃-Alkyl bedeuten, insbesondere 2,6-Diisopropylanilin oder Verbindungen der Formel (V), worin R₃ und R₄ unabhängig voneinander C₁-C₃-Alkyl, vorzugsweise Ethyl oder Isopropyl, bedeuten.

Beispiele besonders geeigneter Stabilisatoren (c1) sind 2,6-Diisopropylanilin, Bis(4-amino-3,5-diethylphenyl)methan, Bis(4-amino-3-methyl-5-isopropylphenyl)methan, Bis(4-amino-3,5-diisopropylphenyl)methan, Bis(4-amino-3-ethyl-5-methylphenyl)methan, Bis(4-amino-3,5-diethylphenyl)methan, Bis(4-amino-3-methylphenyl)methan und Bis(4-amino-3-chlorphenyl)methan.

Bei den ortho- oder para-Substituenten relativ zur Aminogruppe der Stabilisator-Komponente (c2) handelt es sich um elektronenziehende Gruppen.

Falls der Rest R gemäss Definition der Amine (c2) C₁-C₁₀-Alkyl, C₅-C₆-Cycloalkyl oder C₆-C₁₀-Aryl bedeutet, gilt für diesen Rest das weiter oben für die entsprechenden Substituenten der Komponenten (c1) ausgeführte.

Wenn R Aminoaryl bedeutet, so handelt es sich bevorzugt um ein Aminoaryl mit 6 bis 10 Ringkohlenstoffatomen, z.B. um Aminonaphthyl oder Aminophenyl, wie 1-Amino-4-naphthyl, 2-Amino-6-naphthyl, 2-Amino-7-naphthyl, oder 2-, 3- und insbesondere 4-Aminophenyl.

Falls R für eine Gruppe -R′-OOC-C₆H₄NH₂ steht, bedeutet R′ vorzugsweise C₂-C₁₀-Alkylen, und die Aminogruppe ist vorzugsweise in para-Stellung am Phenylring.

Bevorzugte Komponenten (c2) sind Verbindungen mit einer oder zwei NH₂-Gruppen und einem pKa-Wert von 2-3,5. Beispiele bevorzugter Verbindungen sind Anthranilsäure oder Verbindungen der Formel (VI) 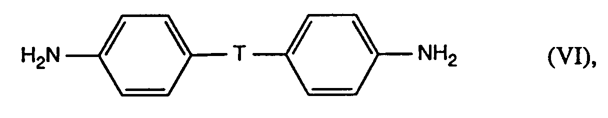
worin T für CO, SO und insbesondere für SO₂ oder -COO(CH₂)ₙOOC- mit n = 2-6, vorzugsweise n = 2 oder 3, steht.

Geeignete Komponenten (c2) sind zum Beispiel 4-Aminobenzoesäure, Anthranilsäure, Bis(4-aminophenyl)sulfon, Bis(4-aminophenyl)sulfoxid, Bis(4-aminophenyl)keton oder 1,3-Propandiolbis(4-aminobenzoat).

Beispiele geeigneter als Komponente (c3) verwendeter Bipyridine sind 2,3′-, 2,4′-, 3,3′-, 4,4′- und insbesondere 2,2′-Bipyridin. Diese Komponenten (c3) sind als Stabilisator weniger bevorzugt als die oben beschriebenen Aminkomponenten (c1) und (c2).

Die Stabilisator-Komponenten (c1) und (c2) können als solche im härtbaren Stoffgemisch enthalten sein oder können, falls zweckmässig, mit dem Epoxidharz (a) vor der Zugabe des Sulfoniuminitiators (b) teilweise oder vollständig vorreagiert werden. Diese Vorreaktion erfolgt vorzugsweise bei erhöhter Temperatur, z.B. bei 100-200°C. Erfindungsgemäss wird aber die Ausführungsform bevorzugt, bei der die Komponenten (c1) und (c2) ohne Vorreaktion mit dem Epoxidharz eingesetzt werden.

Bevorzugt liegt das Amin in einer Menge von 0,05 bis 3 Gew.-%, bezogen auf das Epoxidharz, vor.

Wie oben ausgeführt, erhöhen die Stabilisatoren (c) wesentlich die Lagerstabilität der erfindungsgemässen Stoffgemische, ohne dabei die nach der Lagerung vorzunehmende thermische Vernetzungsreaktion zu beeinträchtigen. Die Vernetzung erfolgt bei erhöhter Temperatur immer noch schnell und vollständig und resultiert in gehärteten Produkten mit ganz ausgezeichneten Eigenschaften.

Als Epoxidharz (a) der erfindungsgemässen Stoffgemische eignen sich praktisch alle Epoxidharze. Beispiele dafür sind:
I) Polyglycidyl- und Poly-(β-methylglycidyl)-ester, die sich von Verbindungen mit mindestens zwei Carboxylgruppen im Molekül und Epichlorhydrin bzw. Glyzerindichlorhydrin bzw. β-Methylepichlorhydrin ableiten.
   Als Verbindungen mit mindestens zwei Carboxylgruppen im Molekül können aliphatische Polycarbonsäuren verwendet werden. Beispiel für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophtalsäure oder Terephthalsäure.
II) Polyglycidyl- oder Poly-(β-methylglycidyl)-ether, die sich von Verbindungen mit mindestens zwei freien alkoholischen Hydroxygruppen und/oder phenolischen Hydroxygruppen und Epichlorhydrin oder β-Methylepichlorhydrin ableiten.
   Beispiele für Verbindungen mit mindestens zwei alkoholischen Hydroxylgruppen sind acyclische Alkohole, wie Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit, Sorbit, sowie Polyepichlorhydrine.
   Solche Ether können sich auch von cycloaliphatischen Alkoholen ableiten, wie von 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en.
   Die Epoxidverbindungen können sich auch von einkernigen Phenolen ableiten, wie beispielsweise von Resorcin oder Hydrochinon; oder sie basieren auf mehrkernigen Phenolen, wie beispielsweise auf Bis-(4-hydroxyphenyl)-methan, 4,4′-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen, wie Phenol, oder mit Phenolen, die im Kern mit Chloratomen oder C₁-C₉Alkylgruppen substituiert sind, wie beispielsweise 4-Chlorphenol, 2-Methylphenol oder 4-tert.Butylphenol, oder erhältlich durch Kondensation mit Bisphenolen, so wie oben beschrieben.
   Zu diesen Epoxidharzen zählen auch die durch sogenannte Vorverlängerung, das heisst, durch Umsetzung von relativ niedrigmolekularen und tiefschmelzenden oder flüssigen Epoxidharzen mit polyfunktionellen Verbindungen erhältlichen höhermolekularen und höherschmelzenden Epoxidharze. Ausgangsprodukte für solche Vorverlängerungsreaktionen sind beispielsweise niedrigmolekulare Diglycidylether auf Bisphenol-Basis, wie Bisphenol-A-Basis, die mit einem Unterschuss eines Bisphenols, wie Bisphenol-A oder Tetrabrombisphenol-A, in an sich bekannter Weise zu höhermolekularen Verbindungen umgesetzt werden.
   Solche Umsetzungen sind an sich bekannt und beispielsweise in Kirk-Othmer "Encyclopedia of Chemical Technology", Band 9, S. 275-276 (J. Wiley & Sons, New York 1980) beschrieben.
III) Poly-(S-glycidyl) Verbindungen, insbesondere Di-S-glycidylderivate, die sich von Dithiolen, wie beispielsweise Ethan-1,2-dithiol oder Bis-(4-merkaptomethylphenyl)-ether ableiten.
IV) Cycloaliphatische Epoxidharze, wie Bis-(2,3-epoxicyclopentyl)-ether, 2,3-Epoxicyclopentylglycidylether oder 1,2-Bis-(2,3-epoxicyclopentyloxy)-ethan oder 3,4-Epoxicyclohexylmethyl-3′,4′-epoxicyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise der Glycidylether-glycidylester der Salicylsäure.

Falls gewünscht, kann eine Mischung von Epoxidharzen in den härtbaren Mischungen verwendet werden.

Zur Steuerung des Viskositätsverlaufs in Stufe iii) des erfindungsgemässen Verfahrens kann es sich anbieten, in Stufe i) ein modifiziertes Epoxidharz einzusetzen, um eine höhere Anfangsviskosität und um einen schnelleren Anstieg der Viskosität beim Pressschritt zu erzielen.

Dazu kann man das Epoxidharz beispielsweise durch teilweise Umsetzung mit einem bei erhöhter Temperatur wirksamen Epoxidhärter, wie beispielsweise mit einem Anhydridhärter, modifizieren; oder man kombiniert das Epoxidharz mit einer geringen Menge eines Polyphenols, insbesondere eines Novolaks.

Die Menge an Modifizierungsmitteln kann so gewählt werden, dass ein Viskositätsaufbau des zu modifizierenden Harzes erfolgt, der aber nicht so gross ist, dass ein anfänglicher Viskositätsabfall des Epoxidharzes in Schritt iii) unterbleibt.

Vorzugsweise setzt man in dieser Ausführungsform einen Polyglycidylether, insbesondere einen Diglycidylether auf Bisphenol Basis, der gegebenenfalls auch vorverlängert sein kann, teilweise mit einem cyclischen Anhydrid einer Polycarbonsäure, insbesondere einem Anhydrid einer cycloaliphatischen Dicarbonsäure, um; in einer weiteren bevorzugten Ausführungsform dieser Variante kombiniert man einen Polyglycidylether, insbesondere einen Diglycidylether auf Bisphenol Basis, der gegebenenfalls auch vorverlängert sein kann, mit einer geringen Menge eines Novolaks, insbesondere eines Phenol-Formaldehyd-Novolaks oder eines Kresol-Formaldehyd-Novolaks.

Die Härtungsinitiatoren der Formel (I) bis (IV) sind in der EP-A-0 379 464 beschrieben, deren Offenbarung einen Teil der vorliegenden Beschreibung bilden soll. Die Erläuterungen, die dort zu den verschiedenen Resten der Formeln (I) bis (IV) gegeben sind, gelten auch für die vorliegende Erfindung.

Besonders geeignet für die erfindungsgemässen Gemische sind Sulfoniumsalze der Formel (I) oder (II) als Initiatoren, worin A ein C₁-C₁₂-Alkyl, C₃-C₈-Cycloalkyl oder ein unsubstituiertes oder durch Halogen oder C₁-C₄-Alkyl substituiertes Phenyl, bedeuten Ar, Ar₁ und Ar₂ unabhängig voneinander je ein unsubstituiertes oder durch C₁-C₈-Alkyl, C₁-C₄-Alkoxy, Cl oder Br einfach oder mehrfach substituiertes Phenyl und Q^{⊖} für SbF₆- oder SbF₅OH- steht, wie beispielsweise Dibenzylethylsulfonium- oder Dibenzylcyclohexylsulfoniumhexafluoroantimonat.

Die härtbaren Stoffgemische können noch weitere Zusatzstoffe enthalten.

Dabei kann es sich um Zusätze handeln, mit denen die Endeigenschaften der gehärteten Produkte und/oder die Verarbeitungseigenschaften der Mischung modifiziert werden.

Beispiele für solche Zusatzstoffe sind Füllstoffe oder Streckmittel, wie Kreide, Talkum, Kaolin, Glimmer, Gips, Titandioxid, Quarzmehl, Aluminiumoxid, Cellulose, Tonerde, gemahlener Dolomit, Wollastonit, Kieselerde mit grosser spezifischer Oberfläche (erhältlich unter dem Handelsnamen Aerosil), gepulvertes Polyvinylchlorid, Polyolefine sowie Metallpulver, wie Kupfer-, Silber-, Aluminium- oder Eisenpulver, Flammschutzmittel, wie Antimontrioxid; Farbmittel, wie Pigmente oder Farbstoffe; Lichtstabili satoren zur Verbesserung der UV-Beständigkeit des fertigen Schichtstoffes; Trennmittel, um beispielsweise die einzelnen in Schritt i) hergestellten Schichten zwischenzeitlich zu trennen, wie Trennfolien, filmbildende Lacke oder Wachse; Thixotropiemittel, wie hochdisperse Kieselsäure; reaktive Verdünnungsmittel, wie Phenyl- oder Kresylglycidylether, Butandioldiglycidylether oder Hexahydrophthalsäurediglycidylether, oder inerte Verdünnungsmittel, um beispielsweise Imprägnierlösungen aus hochviskosen oder festen Epoxidharzgemischen herzustellen, wie chlorierte aliphatische oder aromatische Kohlenwasserstoffe, z.B. Dichlormethan, Trichlorethan, Tetrachlorethan, Chlorbenzol, oder wie aromatische Kohlenwasserstoffe, wie Toluol oder Xylol, oder wie aliphatische Ketone, wie Aceton oder Methylethylketon.

Besonders bevorzugt sind auch erfindungsgemässe Stoffgemische, worin die Komponente (b) ein Sulfoniumsalz der Formel (I) ist, worin A ein C₁-C₁₂-Alkyl oder ein C₃-C₈-Cycloalkyl bedeutet, Ar und Ar₁ unabhängig voneinander je ein unsubtituiertes oder durch C₁-C₈-Alkyl, C₁-C₄-Alkoxy, Cl oder Br einfach oder mehrfach substituiertes Phenyl bedeuten und Q⁻ für AsF₆⁻ oder SbF₆⁻ steht, und die Komponente (c) eine Verbindung der Formel (V) ist, worin R₃ und R₄ unabhängig voneinander C₁-C₃-Alkyl, insbesondere Ethyl oder Isopropyl, bedeuten.

Die erfindungsgemässen Laminate lassen sich insbesondere zur Herstellung von Leiterplatten und Isolationsmaterialien einsetzen.

Beispiel 1: 571 g eines in Methylethylketon gelösten bromierten, technischen Diglycidylethers auf Basis von Bisphenol A (Epoxidgehalt 1,85 Äquivalente/kg) werden mit 4,0 g Tribenzylsulfonium-hexafluoroantimonat (1 Gew.-%, bezogen auf festes Epoxidharz) und 1,2 g Bis(4-amino-3,5-diethylphenyl)methan (0,3 Gew.-%, bezogen auf das Festharz) homogen vermischt. Mit dieser Lösung wird ein Glasgewebe (200 g/m² Flächengewicht) getränkt. Das mit der Harzlösung getränkte Gewebe wird 3 Minuten lang in einem Abluftofen bei 140 °C getrocknet. Dabei entsteht ein klebfreies, stapelbares Prepreg. 8 Lagen (Schichten) dieses Prepregs (15 x 15 cm gross) werden aufeinandergelegt und bei 170 °C während 15 Minuten zu einem Laminat (Schichtpressstoff) verpresst. Dieser ist blasenfrei. Seine Glasumwandlungstemperatur T_{g} wird mittels Differential-Scanning-Kalorimetrie (DSC) bestimmt und beträgt 136 °C ("T_{g} 1"). Danach wird die gleiche Probe nochmals einer DSC-Messung unterworfen. Diesmal ergibt sich eine Glasübergangstemperatur von 138 °C ("T_{g} 2"). Der sehr geringe Unterschied zwischen T_{g}1 und T_{g}2 zeigt, dass in 15 Minuten, einer vergleichsweise kurzen Zeit, ein ausgehärtetes Laminat erhalten wurde.

Beispiel 2: Wie in Beispiel 1 wird eine Imprägnierlösung aus 571 g der in Beispiel 1 verwendeten Epoxidharzlösung, 1,2 g Bis(4-amino-3,5-diethylphenyl)methan und 4,0g Dibenzylethylsulfoniumhexafluoroantimonat hergestellt. Gemäss Beispiel 1 werden Prepregs durch Trocknung bei 145 °C während 3 Minuten hergestellt und zu einem 8-lagigen Laminat verpresst. T_{g}1 bzw. T_{g}2 betragen 146 und 148 °C, d. h. die Laminate sind nach der kurzen Presszeit ausgehärtet.

Ohne Zusatz des Amins kann nur bei viel niedigerer Temperatur und nur sehr kurz getrocknet werden, bei höheren Temperaturen, wie in den Beispielen angewandt, ist die Epoxidpolymerisation bereits so weit fortgeschritten, dass beim Verpressen nurmehr ein ungenügender Verbund der einzelnen Prepregs miteinander erzielt wird. T_{g}1 und T_{g}2 liegen daher etwa 20 °C niedriger, wenn ein Gemisch ohne Amin angewendet wird.

Beispiel 3: Wie in Beispiel 1 wird eine Imprägnierlösung aus 571 g der in Beispiel 1 verwendeten Epoxidharzlösung, 1,2 g Bis(4-amino-3,5-diethylphenyl)methan und 4,0g Dibenzylcyclohexylsulfoniumhexafluoroantimonat hergestellt. Gemäss Beispiel 1 werden Prepregs durch Trocknung bei 145 °C während 3 Minuten hergestellt und zu einem 8-lagigen Laminat verpresst. T_{g}1 bzw. T_{g}2 betragen 144 und 143 °C.
Ausserdem werden Prepregs einer Prüfung ihrer Lagerstabilität unterzogen. Dazu wird an den Prepregs die Gelierzeit bei 130 °C gemessen, und zwar unmittelbar nach der Prepregherstellung und nach 30-tägiger Lagerung bei Raumtemperatur. Es ergeben sich folgende Werte:

| | | | |
|---|---|---|---|
| Lagerzeit | [Tage] | 0 | 30 |
| Gelierzeit bei 130 °C | [s] | 270 | 245 |

Die Abnahme der Gelierzeit nach 30-tägiger Lagerung beträgt demnach weniger als 10 %. Ohne Aminzusatz nimmt unter sonst gleichen Bedingungen die Gelierzeit nach dreissig Tagen mehr als dreimal so stark ab.

Beispiele 4 - 6: Wie in Beispiel 1 werden 3 Imprägnierlösungen aus je 571 g der in Beispiel 1 verwendeten Epoxidharzlösung hergestellt. Diesen werden Sulfoniumsalze und Amine gemäss der nachfolgenden Tabelle zugesetzt. Nach Beispiel 1 werden Prepregs hergestellt, indem das getränkte Glasgewebe bei 130 - 150 °C während 3 - 4 Minuten getrocknet wird. Je 8 der erhaltenen Prepregs werden bei 170 °C während 15 Minuten zu Laminaten verpresst. Die Glasumwandlungstemperaturen sind in der genannten Tabelle angegeben, ausserdem die Gelierzeiten der Prepregharze vor und nach 30 tägiger Lagerung bei Raumtemperatur. Man erkennt an den Werten, dass die Laminate ausgehärtet sind und die Prepregs genügend lagerstabil.

| Sulfoniumsalz/Amin | | T_{g}1/T_{g}2 [°C] | Prepreggelierzeit bei 130 °C nach | | |
|---|---|---|---|---|---|
| | | | 0 Tagen [s] | 30 Tagen [s] | |
| 4,00 g | Dibenzylcyclohexylsulfoniumhexafluoroantimonat/ | 134/133 | 104 | 86 | |
| 0,68 g | Diaminodiphenylsulfon | | | | |
| 4,00 g | Tribenzylsulfoniumhexafluoroantimonat/ | 140/139 | 145 | 140 | |
| 0,78 g | 2,6-Diisopropylanilin | | | | |
| 3,00 g | 1,4-Bis(benzyl-ethylsulfoniummethyl)-benzol-bis-hexafluoroantimonat/ | 130/132 | 165 | 151 | |
| 0,35 g | | | | | Trimethylenglycol-di-p-aminobenzoat |

## Patentansprüche

1. Härtbares Stoffgemisch enthaltend
(a) ein Epoxidharz,
(b) ein Sulfoniumsalz der Formeln (I), (II), (III) oder (IV) 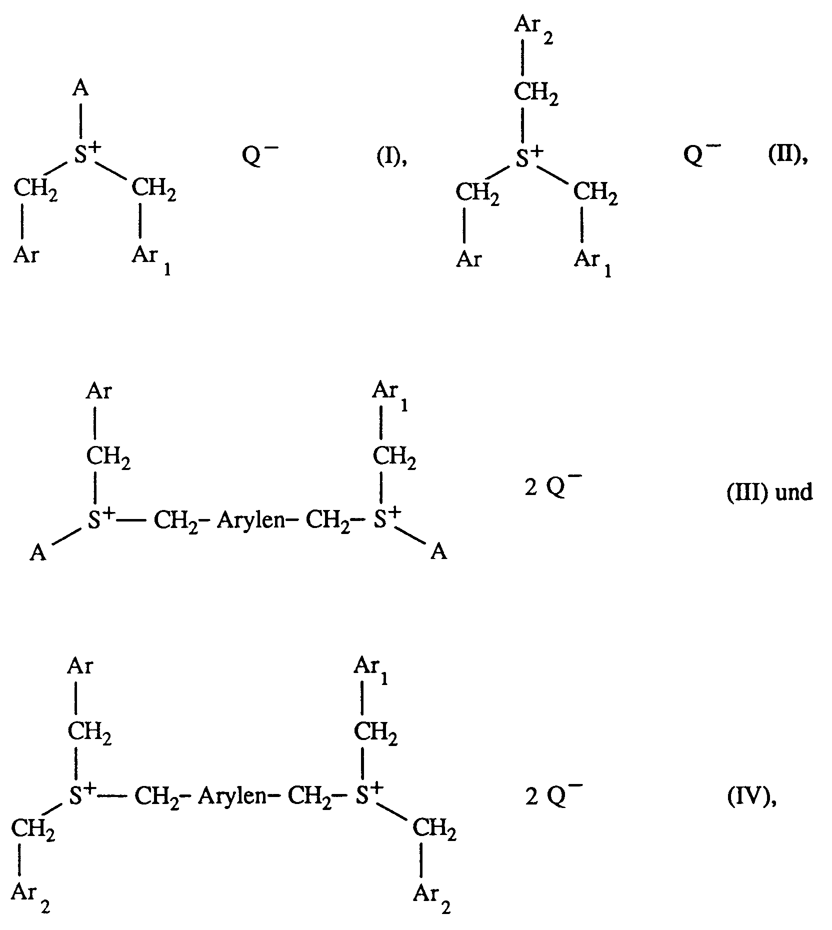 worin A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinanderje ein unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten, Arylen je ein unsubstituiertes oder durch C₁-C₈-Alkyl, C₁-C₄-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder Naphthylen bedeutet und Q⁻ für SbF₆⁻, AsF₆⁻ oder SbF₅OH⁻ steht und
(c) einen Stabilisator ausgewählt aus der Gruppe
(c1) aromatische Amine mit einem pKa-Wert von 2-5 und mit einer bis vier NH₂-Gruppen mit mindestens einem Substituenten in ortho-Stellung zu jeder Aminogruppe, wobei der Substituent C₁-C₁₀-Alkyl, C₁-C₁₀-Alkoxy, C₅-C₆-Cycloalkyl, C₆-C₁₀-Aryl, oder Halogen bedeutet, mit der Massgabe, dass das Amin nicht in beiden ortho-Stellungen zu einer Aminogruppe durch Halogen substituiert ist, oder
(c2) aromatische Amine mit einem pKa-Wert von 2-5 und mit einer bis 4 NH₂-Gruppen mit einem ortho- oder para-Substituenten zu jeder Aminogruppe, wobei der Substituent -COOH, -COOR, -COR, -SO₂R oder -SOR bedeutet und R für C₁-C₁₀-Alkyl, C₅-C₆-Cycloalkyl, C₆-C₁₀-Aryl, Aminoaryl oder -R′-OOC-C₆H₄-NH₂ mit R′ gleich Alkylen steht oder
(c3) Bipyridine,
wobei im Stoffgemisch 0,1-10 Gew.% der Komponente (b) und 0,02-5 Gew.% der Komponente (c), bezogen auf das Epoxidharz (a), vorhanden sind.

2. Stoffgemisch nach Anspruch 1, worin die Komponente (c1) eine oder zwei NH₂-Gruppen und einen pKa-Wert von 3-4,5 hat und in ortho-Stellung zu jeder Aminogruppe mindestens eine Alkylgruppe aufweist.

3. Stoffgemisch nach Anspruch 1, worin die Komponente (c1) ein 2,6-Dialkylanilin oder eine Verbindung der Formel (V) ist 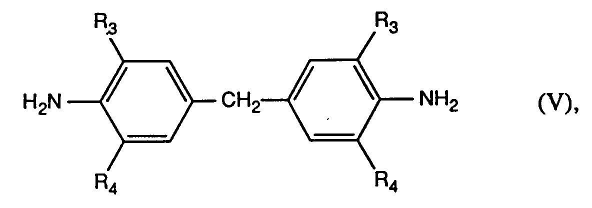 worin R₃ Chlor oder C₁-C₃-Alkyl und R₄ Wasserstoff oder C₁-C₃-Alkyl bedeuten.

4. Stoffgemisch nach Anspruch 3, worin die Komponente (c1) 2,6-Diisopropylanilin oder eine Verbindung der Formel (V) ist, worin R₃ und R₄ unabhängig voneinander C₁-C₃-Alkyl, insbesondere Ethyl oder Isopropyl, bedeuten.

5. Stoffgemisch nach Anspruch 1, worin die Komponente (c2) eine oder zwei NH₂-Gruppen und einen pKa-Wert von 2-3,5 hat.

6. Stoffgemisch nach Anspruch 1, worin die Komponente (c2) Anthranilsäure oder eine Verbindung der Formel (VI) ist 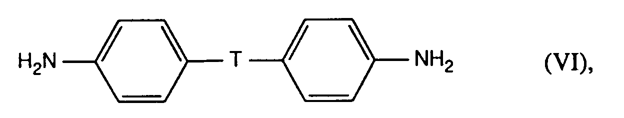 worin T für CO, SO und insbesondere für SO₂ oder -COO(CH₂)ₙOOC- mit n = 2-6, vorzugsweise n = 2 oder 3, steht.

7. Stoffgemisch nach Anspruch 1, worin die Komponente (c3) 2,3′-, 2,4′-, 3,3′-, 4,4′- und insbesondere 2,2′-Bipyridin ist.

8. Härtbares Stoffgemisch nach Anspruch 1, worin die Komponente (b) ein Sulfoniumsalz der Formeln (I) oder (II) gemäss Anspruch 1 ist, worin A ein C₁-C₁₂-Alkyl, C₃-C₈-Cycloalkyl oder ein unsubstituiertes oder durch Halogen oder C₁-C₄-Alkyl substituiertes Phenyl bedeutet, Ar, Ar₁ und Ar₂ unabhängig voneinander je ein unsubstituiertes oder durch C₁-C₈-Alkyl, C₁-C₄-Alkoxy, Cl oder Br einfach oder mehrfach substituiertes Phenyl bedeuten und Q⁻ für SbF₆⁻ oder SbF₅OH⁻ steht.

9. Härtbares Stoffgemisch nach Anspruch 3, worin die Komponente (b) ein Sulfoniumsalz der Formel (I) gemäss Anspruch 1 ist, worin A ein C₁-C₁₂-Alkyl oder ein C₃-C₈-Cycloalkyl bedeutet, Ar und Ar₁ unabhängig voneinanderje ein unsubtituiertes oder durch C₁-C₈-Alkyl, C₁-C₄-Alkoxy, Cl oder Br einfach oder mehrfach substituiertes Phenyl bedeuten und Q⁻ für AsF₆⁻ oder SbF₆⁻ steht, und die Komponente (c) eine Verbindung der Formel (V) gemäss Anspruch 3 ist, worin R₃ und R₄ unabhängig voneinander C₁-C₃-Alkyl, insbesondere Ethyl oder Isopropyl, bedeuten.

10. Prepregs enthaltend ein faserförmiges Trägermaterial und ein Stoffgemisch nach Anspruch 1.

11. Laminate erhältlich durch thermische Härtung der Prepregs nach Anspruch 10.

12. Verfahren zur Herstellung eines Laminates umfassend die Schritte
i) Herstellung einer Schicht durch Kontaktieren eines faserförmigen Trägermaterials mit einem härtbaren Stoffgemisch gemäss Anspruch 1 in einer fliessfähigen Form,
ii) Herstellen einer Schichtfolge aus mindestens zwei schichtförmigen, miteinander zu verbindenden Materialien, wovon mindestens eines davon eine gemäss Schritt i) erhältliche und gewünschtenfalls zuvor zwischengelagerte Schicht ist, bei der das härtbare Material im wesentlichen in unveränderter Form vorliegt, und
iii) Verpressen besagter Schichtfolge bei erhöhter Temperatur und unter Druck.

13. Verfahren nach Anspruch 12, bei dem in Schritt i) das faserförmige Trägermaterial zur Herstellung der Schicht mit einer Lösung des härtbaren Stoffgemisches kontaktiert wird, und das Lösungsmittel bei einer Temperatur bis zu 200°C entfernt wird.

## Claims

1. A curable mixture comprising
(a) an epoxy resin,
(b) a sulfonium salt of the formula (I), (II), (III) or (IV) 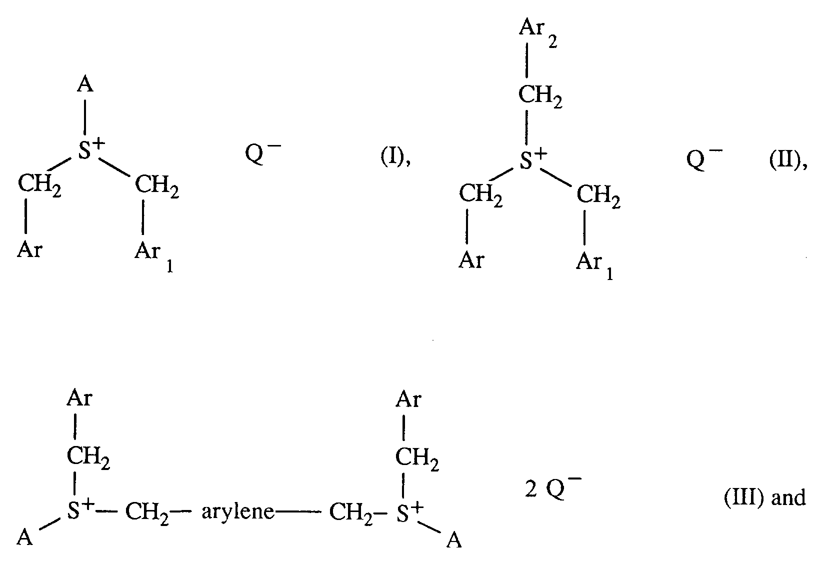 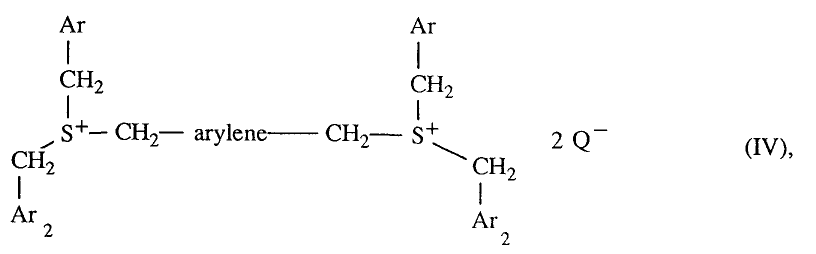 in which A is C₁-C₁₂alkyl, C₃-C₈cycloalkyl, C₄-C₁₀cycloalkylalkyl, phenyl which is unsubstituted or monosubstituted or polysubstituted by C₁-C₈alkyl, C₁-C₄alkoxy, halogen, hydroxyl, nitro, phenyl, phenoxy, alkoxycarbonyl having 1-4 carbon atoms in the alkoxy radical or acyl having 1-12 carbon atoms, Ar, Ar₁ and Ar₂, independently of one another, are each phenyl or naphthyl which is unsubstituted or monosubstituted or polysubstituted by C₁-C₈alkyl, C₁-C₄alkoxy, halogen, hydroxyl, nitro, phenyl, phenoxy, alkoxycarbonyl having 1-4 carbon atoms in the alkoxy radical or acyl having 1-12 carbon atoms, arylene is in each case phenylene or naphthylene which is unsubstituted or monosubstituted or polysubstituted by C₁-C₈alkyl, C₁-C₄alkoxy, halogen, hydroxyl, nitro, phenyl, phenoxy, alkoxycarbonyl having 1-4 carbon atoms in the alkoxy radical or acyl having 1-12 carbon atoms, and Q⁻ is SbF₆⁻, AsF₆⁻ or SbF₅OH⁻, and
(c) a stabiliser selected from the group consisting of
(c1) aromatic amines having a pKₐ value of 2-5 and having one to four NH₂ groups with at least one substituent in the ortho-position to each amino group, the substituent being C₁-C₁₀alkyl, C₁-C₁₀alkoxy, C₅-C₆cycloalkyl, C₆-C₁₀aryl or halogen, with the proviso that the amine is not substituted in both ortho-positions to an amino group by halogen, or
(c2) aromatic amines having a pKₐ value of 2-5 and having one to 4 NH₂ groups with an ortho- or para-substituent to each amino group, the substituent being -COOH, -COOR, -COR, -SO₂R or -SOR where R is C₁-C₁₀alkyl, C₅-C₆cycloalkyl, C₆-C₁₀aryl, aminoaryl or -R'-OOC-C₆H₄-NH₂ where R' is alkylene, or
(c3) bipyridines,
where 0.1-10% by weight of component (b) and 0.02-5% by weight of component (c), based on the epoxy resin (a), are present in the mixture.

2. A mixture according to claim 1, in which component (c1) has one or two NH₂ groups and a pKₐ value of 3-4.5 and contains at least one alkyl group in the ortho-position to each amino group.

3. A mixture according to claim 1, in which component (c1) is a 2,6-dialkylaniline or a compound of the formula (V) 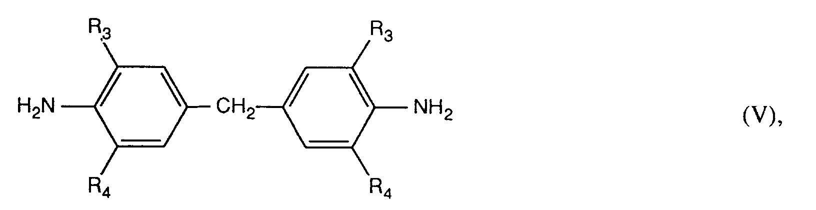 in which R₃ is chlorine or C₁-C₃alkyl, and R₄ is hydrogen or C₁-C₃alkyl.

4. A mixture according to claim 3, in which component (c1) is 2,6-diisopropylaniline or a compound of the formula (V) in which R₃ and R₄, independently of one another, are C₁-C₃alkyl, in particular ethyl or isopropyl.

5. A mixture according to claim 1, in which component (c2) has one or two NH₂ groups and a pKₐ value of 2-3.5.

6. A mixture according to claim 1, in which component (c2) is anthranilic acid or a compound of the formula (VI) 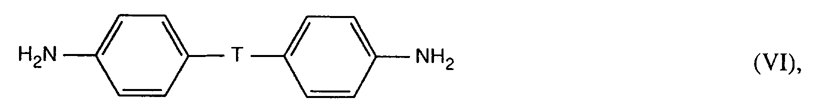 in which T is CO, SO or in particular SO₂ or -COO(CH₂)ₙOOC- where n = 2-6, preferably 2 or 3.

7. A mixture according to claim 1, in which component (c3) is 2,3'-, 2,4'-, 3,3'-, 4,4'- or in particular 2,2'-bipyridine.

8. A curable mixture according to claim 1, in which component (b) is a sulfonium salt of the formula (I) or (II) according to claim 1 in which A is C₁-C₁₂alkyl, C₃-C₈cycloalkyl or phenyl which is unsubstituted or substituted by halogen or C₁-C₄alkyl, Ar, Ar₁ and Ar₂, independently of one another, are each phenyl which is unsubstituted or monosubstituted or polysubstituted by C₁-C₈alkyl, C₁-C₄alkoxy, Cl or Br, and Q⁻ is SbF₆⁻ or SbF₅OH⁻.

9. A curable mixture according to claim 3, in which component (b) is a sulfonium salt of the formula (I) according to claim 1 in which A is C₁-C₁₂alkyl or C₃-C₈cycloalkyl, Ar and Ar₁, independently of one another, are each phenyl which is unsubstituted or monosubstituted or polysubstituted by C₁-C₈alkyl, C₁-C₄alkoxy, Cl or Br, and Q⁻ is AsF₆⁻ or SbF₆⁻ and component (c) is a compound of the formula (V) according to claim 3 in which R₃ and R₄, independently of one another, are C₁-C₃alkyl, in particular ethyl or isopropyl.

10. A prepreg comprising a fibrous support material and a mixture according to claim 1.

11. A laminate obtainable by thermal curing of prepregs according to claim 10.

12. A process for the production of a laminate, which comprises the steps
i) production of a layer by contacting a fibrous support material with a curable mixture according to claim 1 in flowable form,
ii) production of a layer sequence comprising at least two layer materials to be bonded to one another, of which at least one is a layer obtainable in accordance with step i) which, if desired, has been stored in the interim, and in which the curable material is essentially in unmodified form, and
iii) pressing of said layer sequence at elevated temperature and under pressure.

13. A process according to claim 12, in which the fibrous support material is contacted in step i) with a solution of the curable mixture in order to produce the layer, and the solvent is removed at a temperature of up to 200°C.

## Revendications

1. Mélange de matières durcissable contenant
(a) une résine époxyde
(b) un sel de sulfonium de formules I, II, III ou IV 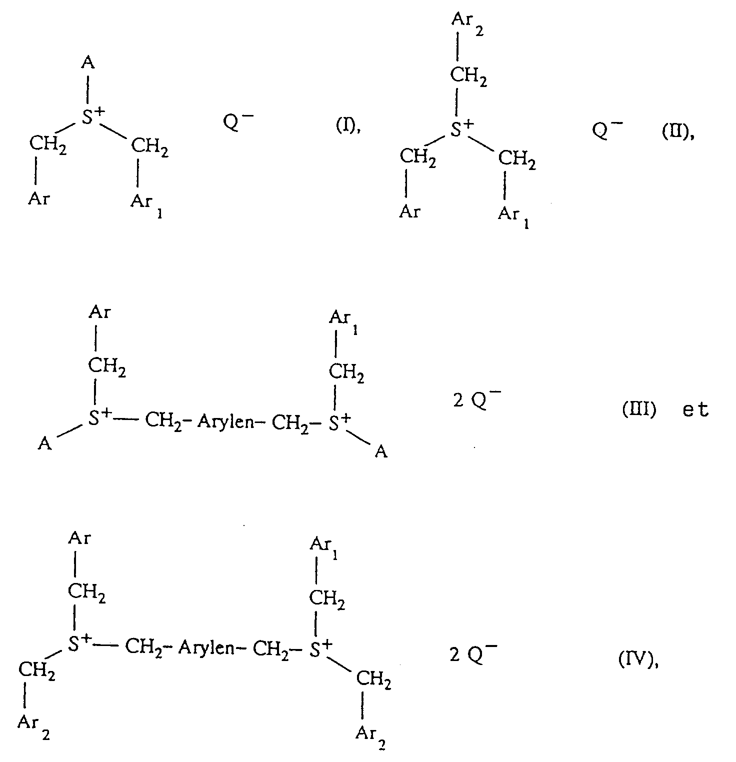 dans lesquelles
A représente un alkyle en C₁-C₁₂, un cycloalkyle en C₃-C₈, un cycloalkyle en C₄-C₁₀, un phényle non substitué ou susbtitué une ou plusieurs fois par alkyle en C₁-C₄, alcoxy en C₁-C₄, halogène, hydroxyle, nitro, phényle, phénoxy, alcoxycarbonyle avec 1 à 4 atomes de carbone dans le radical alcoxy ou acyle avec 1 à 12 atomes de carbone,
Ar, Ar₁ et Ar₂, indépendamment les uns des autres, représentent naphtyle ou phényle non substitué ou substitué une ou plusieurs fois par alkyle en C₁-C₁₀, alcoxy en C₁-C₄, halogène, hydroxy, nitro, phényle, phénoxy, alcoxycarbonyle avec 1 à 4 atomes de carbone dans le radical alkyle ou acyle avec 1 à 12 atomes de carbone, sont aussi arylène qui représente naphtylène ou phénylène chaque fois non substitué ou substitué par alkyle en C₁-C₈, alcoxy en C₁-C₄, halogène, hydroxy, nitro, phényle, phénoxy, alcoxycarbonyle avec 1 à 4 atomes de carbone dans le radical alcoxy ou acyle avec 1 à 12 atomes de carbone, et
Q⁻ représente SbF₆⁻, AsF₆⁻ ou SbF₅OH⁻ et
(c) un stabilisant pris dans le groupe comportant
(c1) des amines aromatiques ayant une valeur de pKa de 2 à 5 et avec 1 à 4 groupes NH₂ avec au moins un substituant en position ortho par rapport à chaque groupe amino, le substituant pouvant représenter alkyle en C₁-C₁₀, alcoxy en C₁-C₁₀, cycloalkyle en C₅-C₆, aryle en C₆-C₁₀, ou halogène, à la condition que l'amine ne soit pas substituée par halogène dans les deux positions ortho par rapport à un groupe amino, ou
(c2) des amines aromatiques ayant une valeur de pKa de 2 à 5 et comportant de 1 à 4 groupes NH₂ avec un substituant ortho ou para par rapport à chaque groupe amino, le substituant représentant -COOH, -COOR, -COR, -SO₂R ou -SOR et
R représente alkyle en C₁-C₁₀, cycloalkyle en C₅-C₆, aryle en C₆-C₁₀, aminoaryle ou -R'OOC-C₆H₄-NH₂ avec R' égale à alkylène,
(c3) bipyridines.

2. Mélange de matières selon la revendication 1 ,où le constituant (c1) présente un ou deux groupes NH₂ et a une valeur de pKa de 3-4,5 et au moins un groupe alkyle en position ortho par rapport à chaque groupe amino.

3. Mélange de matières selon la revendication 1, où le constituant (c1) est une 2,6-dialkylaniline ou un composé de formule (V) 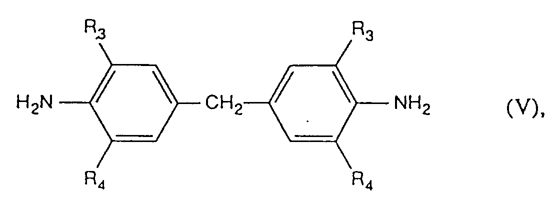 où R₃ représente le chlore ou alkyle en C₁-C₃ et R₄ représente l'hydrogène ou alkyle en C₁-C₃.

4. Mélange de matières selon la revendication 1, où le constituant (c1) est une 2,6-diisopropylaniline ou un composé de formule (V), où R₃ et R₄, indépendamment l'un de l'autre, représentent alkyle en C₁-C₃, plus particulièrement éthyle ou isopropyle.

5. Mélange de matières selon la revendication 1, où le constituant (c2) présente un ou deux groupes NH₂ et a une valeur de pKa de 2-3,5.

6. Mélange de matières selon la revendication 1, où le constituant (c2) est l'acide anthranilique ou un composé de formule (VI) 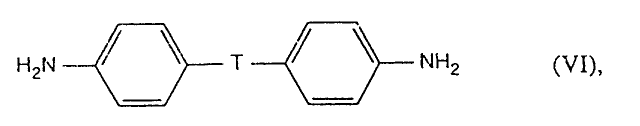 dans laquelle T représente CO, SO et plus particulièrement SO₂ ou -COO(CH₂)ₙOOC- avec n = 2-6, de préférence n = 2 ou 3.

7. Mélange de matières selon la revendication 1, où le constituant (c3) est la 2,3'-, 2,4'-, 3,3'-, 4,4'- et en particulier 2,2'-bipyridine.

8. Mélange de matières durcissable selon la revendication 1, où le constituant (b) est un sel de sulfonium de formules (I) ou (II) selon la revendication 1, dans lesquels A représente un alkyle en C₁-C₁₂, un cycloalkyle en C₃-C₈ ou un phényle non substitué ou substitué par halogène ou alkyle en C₁-C₄, Ar, Ar₁ et Ar₂, indépendamment les uns des autres, chacun représentent phényle non substitué ou substitué une ou plusieurs fois par alkyle en C₁-C₈, alcoxy en C₁-C₄, Cl ou Br et Q⁻ représente SbF₆⁻ ou SbF₅OH⁻.

9. Mélange de matières durcissable selon la revendication 3, où le constituant (b) de formule (I) selon la revendication 1, dans lesquels A représente un alkyle en C₁-C₁₂ ou un cycloalkyle en C₃-C₈, Ar et Ar₁, indépendamment l'un de l'autre, représente phényle non substitué ou substitué une ou plusieurs fois par alkyle en C₁-C₈, alcoxy en C₁-C₄, Cl ou Br, et Q⁻ représente SbF₆⁻ ou SbF₆⁻ et le constituant (c) est un composé de formule (V) selon la revendication 3, où R₃ et R₄, indépendamment l'un de l'autre, représente alkyle en C₁-C₃, plus particulièrement éthyle ou isopropyle.

10. Préimprégnés contenant un support en matière fibreuse et un mélange de matières selon la revendication 1.

11. Stratifiés que l'on peut obtenir par durcissement thermique des préimprégnés selon la revendication 10.

12. Procédé pour la préparation d'un stratifié renfermant les étapes :
i) préparation d'une couche par contact d'un support en matière fibreuse avec un mélange de matières durcissable selon la revendication 1, sous une forme apte à l'écoulement,
ii) préparation d'une succession de couches d'au moins deux matières sous forme de couches à relier entre elles, dont au moins l'une d'elles est une couche que l'on peut obtenir selon l'étape i) et, si on le souhaite, éventuellement stocker préalablement de façon temporaire, dans laquelle la matière durcissable est présente sous forme essentiellement non modifiée, et
iii) compression de ladite succession de couches à une température élevée et sous pression.

13. Procédé selon la revendication 12, selon lequel dans l'étape i) pour la préparation de la couche on met en contact le support en matière fibreuse avec une solution du mélange des matières durcissables et on élimine le solvant à une température allant jusqu'à 200°C.
